**Europäisches Patentamt**

**European Patent Office**

**Office européen des brevets**

(19)

(11) Numéro de publication: **0 093 195 B1**

(12) **FASCICULE DE BREVET EUROPEEN**

(45) Date de publication du fascicule du brevet:
14.06.89

(51) Int. Cl.⁴: **A 23 K 1/10**

(21) Numéro de dépôt: 82108660.0

(22) Date de dépôt: 20.09.82

(54) Produit nouveau à base d'animaux marins invertébrés, son procédé de fabrication et son utilisation pour l'alimentation animale ou comme engrais.

(30) Priorité: 26.04.82 FR 8207125

(43) Date de publication de la demande:
09.11.83 Bulletin 83/45

(45) Mention de la délivrance du brevet:
14.06.89 Bulletin 89/24

(84) Etats contractants désignés:
CH DE FR GB LI NL

(56) Documents cités:
DE-C- 815 596
FR-A- 2 508 768

M. BECKER et al. "Handbuch der Futtermittel", vol. 3, 1967, pages 199-279, Verlag P. Parey, Hamburg H. HENKEL "Aus Tierkörpern und deren Bestandteilen gewonnene Futtermittel"
Chemical Abstracts, vol. 40, no 16, 20 août 1946, Columbus, Ohio, USA A.M. FRENS "Starfish meal as protein feed", colonne 4819 & Verlag. Landb. Onderzoek, vol. 51, no 4, Chapitres 59-74, 1945
Chemical Abstracts, vol. 39, no 4, 20 février 1945,

(73) Titulaire: Lemonnier, Monique, née Perrier, "Les Bucoliques" 10 chemin aux Boeufs, F-14123 Ifs-Plaine (FR)

(72) Inventeur: Lemonnier, Monique, née Perrier, "Les Bucoliques" 10 chemin aux Boeufs, F-14123 Ifs-Plaine (FR)

(74) Mandataire: Letheule, Jacqueline et al, 5 Rue José-Maria de Hérédia, F-75007 Paris (FR)

(56) Documents cités: (suite)
Columbus, Ohio, USA R.E. MORSE et al. "The value of starfish meal in the poultry starting ration", colonnes 732-733 & Poultry Sci., vol. 23, pages 408-412, 1944
COMMERCIAL FISHERIES REVIEW, vol. 10, no 6, juin 1948, Washington, D.C. (US) C.F. LEEE "Technological studies of the starfish - part V-starfish as fertilizer", pages 11-16

ACTORUM AG

## Description

L'invention concerne un produit à base d'animaux marins invertébrés tels que des étoiles de mer de préférence, utilisable pour l'alimentation animale ou comme engrais. L'invention a pour but de fournir un nouveau produit particulièrement approprié de par sa structure et ses propriétés à l'élaboration d'aliments pour animaux ou d'engrais. Elle a également pour but de fournir un procédé de fabrication de mise en œuvre aisée, permettant l'obtention d'un produit à base d'animaux marins invertébrés plus performant au regard des exigences de la technique.

Dans une demande antérieure, la Demanderesse avait déjà décrit un procédé d'obtention d'une poudre à base d'étoiles de mer de préférence, déshydratées, biscottées et broyées constituant un produit d'apport pour l'alimentation animale et plus particulièrement pour les petits élevages délicats de pintadeaux, faisandeaux, perdreaux et autres poussins, ou bétail, en mélange notamment avec des tourteaux de lin, ou pour un engrais. En effet, selon ce procédé, on prévoit de déverser des étoiles de mer préalablement lavées et nettoyées sur un tapis transporteur ignifugé, de les stationner sous un tunnel muni de moyens de chauffage, de les déshydrater parfaitement c'est-à-dire de façon excellente, c'est-à-dire à un taux amélioré par rapport à l'état de la technique, donc à un taux de 0% minimum à 3% maximum, puis de les biscotter, enfin de les broyer.

On connaissait également des produits à base de poisson ou des farines d'étoiles de mer plus ou moins pures. Toutefois ces produits tels qu'ils étaient traités en pulvérulents présentaient des inconvénients de gaspillage par exemple ou de mise en forme plus coûteuses.

La recherche d'un produit plus satisfaisant, notamment quant à son champ d'application, son appétence pour d'autres élevages que ceux des poussins et/ou autres précités, et moins coûteux que les produits traditionnels, a conduit l'inventeur à mettre sur le marché un produit nouveau plus percutant quant à son utilisation.

Le produit selon l'invention est caractérisé en ce qu'il subit un traitement comprenant diverses étapes permettant l'obtention d'un produit spécifique pur, déshydraté, biscotté et aplati.

Selon un procédé de réalisation avantageux, on amène par exemple 10 kg d'étoiles de mer fraîches ou congelées et préalablement lavées au jet, dans une chambre chaude à une température de l'ordre de 24 à 30 °C environ pour amorcer soit la déshydratation pour les étoiles de mer fraîches, le temps d'une marée par exemple, soit la décongélation le temps étant alors fonction de la grosseur des espèces, en général 24 heures à 24 °C pour des étoiles de 15 cm d'envergure.

Nettoyées soigneusement, les étoiles ainsi préparées sont transportées par un convoyeur tel que tapis roulant, vis sans fin ou autre, dans un four à mode de chauffage quelconque, mais à température de l'ordre de 80 à 95 °C où elles sont disposées de préférence sur des grilles pendant 15 à 25 minutes environ pour des étoiles de 10 à 15 cm d'envergure et de 0,5 à 1 cm d'épaisseur et de 10 minutes supplémentaires en moyenne pour chaque envergure supérieure de 3 à 5 cm et/ou de 1 cm d'épaisseur environ.

Au bout de ce temps, les étoiles blondes et croustillantes sont alors amenées dans un marteau-broyeur par exemple ou sous un dispositif actionné hydrauliquement, et/ou électriquement et/ou par tout autre moyen, dispositif de pilonnage, de martèlement ou tout autre moyen équivalent, pour être fragmentées et aplaties jusqu'à constitution d'un produit pur, déshydraté, biscotté, aplati en fragments de l'ordre de 1 à 3 cm environ. 10 kg d'étoiles de mer fourniront environ 4 kg de produit pur, déshydraté, biscotté, aplati, couleur blond/beige.

Il s'agit là d'un produit nouveau qui constitue en tant que tel un des objets de l'invention. Ce produit est riche en oligo-éléments, glucides, phosphore, manganèse, azote, calcium, zinc, fer en particulier et autres éléments et présente notamment l'avantage d'être très digestible pour l'animal bien que les étoiles n'aient pas été au préalable dégraissées.

Son caractère pur, déshydraté, biscotté, aplati, avec un taux de rétention d'eau de 3% minimum à 15% maximum, le rend particulièrement approprié pour l'élaboration d'aliments destinés au bétail. En outre sa forme peu coûteuse d'aplati qui s'intègre parfaitement aux autres aplatis usuels et/ou tourteaux enrichit l'état de la technique d'autant que son aspect blond, sa structure croustillante et sa prise facile en fragments de 1 à 3 cm environ sont autant d'éléments d'appétence et de digestibilité non négligeables pour les élevages caprins, ovins, bovins et autres.

Du fait toujours de cette structure avec ce même taux de rétention d'eau de 3% minimum à 15% maximum, du fait en outre qu'il n'est pas dégraissé, ce produit nouveau sous forme d'aplati est en mesure également de flotter un certain temps à la surface de l'eau puis de se désagréger peu à peu, ce qui permet de l'utiliser aussi en aliment d'aquaculture ou de pisciculture.

Ce produit est enfin aisément assimilable par le sol et donc avantageusement utilisable en tant qu'engrais. Sous sa forme d'aplati, il permet de limiter les pertes de distribution par temps venteux et du fait de sa lente désagrégation, il a une activité plus durable dans les sols. Des expérimentations en utilisant 20 g/m², c'est-à-dire selon la terminologie utilisée, une petite poignée, procurent des résultats de grand intérêt avec des cultures variées, céréales, fourragères, maraîchères, voire horticoles.

DESCRIPTION DÉTAILLÉE DE L'INVENTION:

Les étoiles de mer, fraîches ou congelées, sont d'abord lavées au jet de préférence, puis amenées dans une chambre chaude fermée d'une température de l'ordre de 24 °C à 30 °C environ durant le temps par exemple d'une marée pour les étoiles fraîches et de préférence à 24 °C pendant 24 h pour les étoiles congelées pour des étoiles de 15 cm d'envergure en moyenne de référence, et de 0,5 à 1 cm d'épaisseur, en ajoutant 10 mn supplémentaires pour chaque envergure de 5 cm en sus et/ou d'une épaisseur égale chaque fois à 1 cm de plus environ. La durée est évidemment fonction des espèces. C'est une étape de préchauffage et/ou de décongélation.

Dans une seconde étape, comme il a déjà été indiqué, les étoiles de mer sont convoyées après avoir été nettoyées soigneusement, par un convoyeur tel que tapis roulant ou vis sans fin ou autre avantageusement dans un four à mode de chauffage quelconque mais à température de l'ordre de 80 à 95°C pour y subir l'opération de déshydratation.

Le four pourra être équipé de soufflerie, thermostat (à position 2 de préférence), lampe témoin, programmateurs ou autres. L'étape de déshydratation aura avantageusement une durée de 25 mn environ pour des étoiles de référence et de 10 mn supplémentaires pour chaque envergure de 5 cm en sus et/ou d'une épaisseur égale chaque fois à 1 cm en plus environ.

Pour obtenir les produits biscottés, on soumet les produits déshydratés qui sont laissés lors de l'étape de chauffage dans le four éteint, à la température régnante, pendant environ une heure. On obtient ainsi des produits à l'aspect doré et à la consistance biscottée.

Pour ces deux étapes de déshydratation et de biscottage on peut procéder comme dans le premier brevet n° 8 205 679 sous tunnel infra-rouges.

Pour l'obtention à la sortie du four de produits aplatis, on procède comme suit: les étoiles de mer pures, déshydratées, biscottées sont dirigées par convoyeur ou autre, soit dans un marteau-broyeur, soit vers une aire de martèlement pour y être fragmentées et aplaties. Un dispositif de préférence linéaire est installé au-dessus de la table de travail sous une forme indifférente de marteaux ou de pilons, avec une force de frappe suffisante pour obtenir des fragments aplatis de l'ordre de 1 à 3 cm de préférence. Cette force équivaudra à celle d'un homme normal de constitution moyenne frappant assez fortement avec un marteau sur une étoile biscottée pour obtenir des fragments aplatis de 1 à 3 cm environ. Cette force sera actionnée hydrauliquement, et/ou électriquement ou tout autre moyen à partir d'un groupe électrogène ou non, ou tout autre moyen. On notera que tous les appareils électriques mis en œuvre seront conformes aux normes de sécurité industrielle et prêts à fonctionner de préférence en 380 V triphasé selon nécessité et/ou implantation. La force s'exercera de haut en bas.

L'opération peut avantageusement s'effectuer dans une durée de l'ordre de 1 à 3 mn environ pour des étoiles de référence de 0,5 à 1 cm d'épaisseur et de 10 à 15 cm d'envergure environ. A la fin de l'opération on obtient pour 1 kg d'étoiles de mer, 300 g environ de produit aplati.

Comme déjà indiqué, les propriétés nutritives et fertilisantes des constituants des produits de l'invention peuvent avantageusement être mises à profit pour la préparation d'aliments pour animaux, y compris aquaculture et pisciculture ou d'engrais.

A cete effet, le produit nouveau peut aussi être mélangé notamment à de la farine de céréales et/ou de viande et/ou avec du lait en poudre et/ou avec de la farine de poissons et/ou avec de la poudre d'œufs et/ou avec des tourteaux et/ou des aplatis et/ou des matières cellulosiques et/ou autres éléments.

On notera que l'invention s'applique à la classe entière des étoiles de mer (ou Astérides) avec ses sous-classes des Somastérides et des Euastérides et les ordres des Platyastérides, Phanérozonides, Spinulosides, Euclasterides et Forcipulatides, leurs sous-ordres et leurs familles (à l'exception des espèces venimeuses comme l'Acanthaster Planci par exemple). L'utilisation d'autres animaux invertébrés tels que les Holothuria, vers à soufre et analogues entre dans l'invention.

Les formulations qui vont suivre pourront donner un aperçu de l'intérêt de l'invention:

Formulation A (bétail)
| | |
|---|---|
| – aplati biscotté d'étoiles de mer | 30% |
| – tourteaux d'arachide, maïs, tournesol, soja | 20% |
| – matières cellulosiques | 30% |
| – betteraves | 6% |
| – humidité | 14% |

Formulation B (aquaculture, pisciculture)
| | |
|---|---|
| – poudre d'œufs | 8% |
| – aplati d'étoiles de mer | 32% |
| – matières grasses | 10% |
| – matières minérales | 7,5% |
| – farine de soja, plancton, varech, chlorophylle, farine d'avoine, blé, seigle, sang, vitamines | 32% |
| – fibres max | 2,5% |
| – humidité | 8% |

Formulation C (pour l'utilisation des produits de l'invention comme fertilisants)

L'aplati pur, déshydraté, biscotté est mélangé avec par exemple des boues pasteurisées commercialisables des stations d'épuration selon les normes de l'AFNOR et on ajoute par exemple du fumier déshydraté de cheval ou autre en tenant compte du rapport carbone/azote qui est:
| | |
|---|---|
| – carbone | 25 à 30% |
| – Azote total | 3 à 8% |

(pour les boues de station d'épuration en général) et:
| | |
|---|---|
| – carbone | 31% |
| – Azote Kjeldhal | 4,88% |

(pour un échantillon d'étoiles de mer de la Manche) en moyenne par rapport à la matière sèche.

Ce produit aplati est avantageusement utilisé pour l'amélioration du sol, notamment comme engrais de fond pour légumes, arbres fruitiers, fleurs. On note une action progressive et de longue durée. Les aplatis peuvent être répandus et enfouis en retournant la terre. La dose au $m^2$ est avantageusement de 2 kg pour préparation des semis, 250 g à 2 kg selon importance du tronc et grosseur du plant. (Amendement organique NF U 44 051 à respecter.)

Des résultats remarquables ont été observés, notamment sur du gazon, salades, géraniums, haricots verts, fraisiers, carottes, oignons, et ce, malgré de mauvaises conditions atmosphériques.

Ce produit est particulièrement adapté aux grandes cultures, luzerne, maïs et autres céréales, betteraves...

Ce produit a également été testé sur des animaux: On a administré à un épagneul breton à raison de 3 à 4 g par jour dans sa nourriture un produit selon l'invention. L'animal, amorphe en début d'expérience, est devenu dynamique avec des poils plus brillants dès le quatrième jour. On a réalisé une expérience sur une portée de six chiots avec une alimentation renfermant, à raison de 2 à 3 g par jour de produit de l'invention. Les chiots ainsi nourris sont beaucoup plus forts que les trois autres (trois ont reçu les produits). Leur croissance est supérieure. On a alimenté une chienne avant et après mise bas, comme indiqué ci-dessus pour l'épagneul. On n'observe aucune mortalité de chiots à la naissance et une bonne lactation jusqu'au sevrage à trois, quatre mois et la chienne aurait pu continuer à nourrir très facilement.

La même expérience a été faite sur une vache charolaise et sur une Maine-Anjou, les résultats ont été confirmés.

**Revendications**

1. Produit possédant des propriétés pouvant servir à l'élaboration d'aliments pour animaux ou d'engrais, caractérisé en ce qu'il est à base d'animaux invertébrés nettoyés, de préférence des étoiles de mer, ou d'autres animaux marins invertébrés tels que les holothuria, vers à soufre, en ce qu'il est riche en oligo-éléments et autres éléments de nutrition et qu'il se présente sous forme d'un produit déshydraté et biscotté, et aplati en aval.

2. Produit selon la revendication 1, caractérisé en ce qu'il est riche en zinc et en glucides.

3. Produit selon l'ensemble des revendications 1 et 2, caractérisé en ce qu'il possède un taux de rétention d'eau de 3% minimum à 15% maximum.

4. Aliments pour animaux, caractérisés en ce qu'ils renferment une quantité efficace de produit selon l'une quelconque des revendications 1 à 3.

5. Engrais pour agriculture, horticulture, cultures maraîchères, caractérisés en ce qu'ils renferment une quantité efficace de produit selon l'une quelconque des revendications 1 à 3.

6. Procédé de fabrication d'un produit selon l'une quelconque des revendications 1 à 3, caractérisé en ce que les étoiles de mer subissent un traitement de déshydratation dans un four à température de 80 à 95°C où les étoiles de mer de préférence sont disposées sur des grilles pendant 15 à 25 minutes environ pour des étoiles de dix à 15 cm d'envergure et de 0,5 à 1 cm d'épaisseur et de dix minutes supplémentaires pour chaque envergure supérieure de 5 cm et/ou d'une épaisseur égale chaque fois à 1 cm en plus environ, le chauffage du four déclenché les étoiles étant encore laissées 1 heure environ à température régnante pour subir ainsi outre le traitement de déshydratation, celui de biscottage.

7. Procédé de fabrication selon la revendication 6, caractérisé en ce que le produit subit un traitement de martèlement dans un marteau-broyeur ou assimilé ou de préférence sous un dispositif linéaire avantageusement muni de pilons ou marteaux, actionné hydrauliquement ou électriquement de préférence, avec une force s'exerçant de haut en bas équivalant à celle d'un homme normal de constitution moyenne frappant assez fort pour obtenir des fragments d'étoiles de mer de préférence aplatis de l'ordre de 1 à 3 cm.

**Claims**

1. Product possessing qualities permitting elaboration of animal food or fertilizer, characterised in that it is a cleaned invertebrate animal base product, preferably star-fish, or other invertebrate marine animals such as holoturias, sulfur worms, rich in oligoelements and other nutrition elements and that it presents itself in the form of a dehydrated and rusked product, and flattened during treatment.

2. Product according to claim 1, characterized in that it is rich in zinc and glucids.

3. Product according to claims 1 and 2, characterized in that it possesses a water retention level of a minimum of 3% and a maximum of 15%.

4. Food for animals, characterized in that it contains an effective quantity of product according to any one of claims 1 to 3.

5. Fertilizers for agriculture, horticulture, market gardening, characterized in that they contain an effective quantity of product according to any one of claims 1 to 3.

6. Method for manufacture of a product according to any one of claims 1 to 3, characterized in that the star-fish go through a dehydration treatment within an oven at a temperature of 80 to 95°C, where the star-fish are, preferably, set on a grid about 15 to 20 minutes in the case of star-fish with a span of 10 to 15 centimeters and a thickness of 0,5 to 1 centimeter and further minutes for any span superior by 5 cms and/or of a thickness each time equal to about an extra cm., the heating of the oven being released the star-fish are left a further house or so at prevailing heat in order to submit to, besides the dehydrating treatment, rusked and fragmentation treatment.

7. Method for manufacture according to claim 6, characterized in that the product has gone through a hammering treatment in a hammergrinder or similar or, preferably, in a lineary hydraulic or electric device advantageously equipped with pestles or hammers, with its force exerting from top to bottom equivalent to that of a normally constituted man hitting sufficiently hard to obtain star-fish fragments preferably flattened to between 1 and 3 cm.

**Patentansprüche**

1. Es handelt sich um ein Produkt, das Eigenschaften hat, die zu der Ausarbeitung von Futter- oder Düngemitteln nützen können. Dieses Produkt kennzeichnet sich durch seine Anfertigung aus gereinigten wirbellosen Tieren, vorzugsweise aus Seesternen oder aus anderen wirbellosen Tieren aus dem Meer, wie die Seegurken. Dieses Produkt kennzeichnet sich auch durch seinem Reichtum an Spurenelementen und an anderen Elementen der Ernährung. Außerdem stellt es sich als ein ausgetrocknetes Produkt vor, einem Zwieback ähnlich und abgeflacht in seinem unteren Teil.

2. Nach der ersten Forderung ist es ein charakterisiertes Produkt durch seinen Reichtum an Zink und Kohlenhydraten.

3. Nach der Gesamtheit der ersten und zweiten Forderungen hat dieses Produkt einen Prozentsatz der Retention von Wasser von mindestens 3% bis höchstens 15%.

4. Futtermittel, die sich durch eine wirksame Quantität von Produkt nach irgendeiner der Forderungen 1 bis 3 kennzeichnen.

5. Düngemittel für Landwirtschaft, Gartenbau, Gemüseanbau, die sich durch eine wirksame Quantität von Produkt nach irgendeiner der Forderungen 1 bis 3 kennzeichnen.

6. Herstellungsverfahren eines Produktes nach irgendeiner der Forderungen 1 bis 3, gekennzeichnet durch die Tatsache, daß die Seesterne einer Behandlung der Trocknung unterworfen sind und dies in einem Ofen mit einer Temperatur zwischen 80 und 95 Grad.

Die Seesterne liegen vorzugsweise auf Rosten während etwa 15 bis 25 Minuten. Dies gilt nur für Seesterne eines von 10 bis 15 Zentimeter Durchmessers und einer von 0,5 bis 1 Zentimeter Dichte.

Man rechnet mit 10 zusätzlichen Minuten für jeden überlegenen Durchmesser von 5 Zentimetern oder auch für eine Dichte, die jedesmal 1 Zentimeter mehr hat.

Die Seesterne bleiben noch etwa eine Stunde in der Heizung des ausgeschalteten Ofens, um – ausser der Behandlung der Trocknung – die des «Zwieback-Werdens» zu bekommen.

7. Herstellungsverfahren, nach der sechsten Forderung, charakterisiert durch eine Behandlung des Hämmerns in einem Zerkleinerer-Hammer oder ähnliches oder noch besser unter einer linearen Anlage, die mit Stösseln oder Hämmern ausgestattet ist und die hydraulisch oder noch besser elektrisch geschaltet ist.

Diese Anlage funktioniert dank einer Kraft, die sich von oben nach unten ausübt und die der Kraft eines in normaler Verfassung Menschen entspricht, der ziemlich stark schlägt, um abgeflachte Stücke von 1 bis 3 Zentimeter von Seesternen zu erhalten.